# EUROPÄISCHE PATENTSCHRIFT

(11) **EP 3 503 840 B1**
(45) Veröffentlichungstag und Bekanntmachung des Hinweises auf die Patenterteilung: **02.07.2025**
(21) Anmeldenummer: 17754147.1
(22) Anmeldetag: 14.08.2017
(51) Int. Cl.: A61C 13/01, A61C 13/10, A61C 13/00

(54) **ZAHNEINHEIT SOWIE VERFAHREN ZUR HERSTELLUNG EINER PROTHESENBASIS**
TOOTH UNIT AND METHOD FOR PRODUCING A DENTURE BASE
UNITÉ DE DENT AINSI QUE PROCÉDÉ POUR LA FABRICATION D'UN BASE PROTHÉTIQUE

(30) Priorität: 26.08.2016 EP 16185833
(43) Veröffentlichungstag der Anmeldung: 03.07.2019
(73) Patentinhaber: Vita Zahnfabrik H. Rauter GmbH & Co. KG, 79713 Bad Säckingen (DE)
(72) Erfinder: KIRSTEN, Armin, Dr., 79713 Bad Säckingen (DE)
(74) Vertreter: dompatent von Kreisler Selting Werner - Partnerschaft von Patent- und Rechtsanwälten mbB
(86) Internationale Anmeldenummer: PCT/EP2017/070572
(87) Internationale Veröffentlichungsnummer: WO 2018/036853

(56) Entgegenhaltungen:
- EP-A2- 2 666 438
- WO-A1-2015/055790
- WO-A1-2015/078701
- WO-A1-2015/194449
- WO-A1-2016/110392
- DE-A1- 102014 107 418
- US-A1- 2015 111 177
- US-A1- 2016 095 677

## Beschreibung

Die Erfindung betrifft eine Zahneinheit mit einem künstlichen Zahn zum Einsetzen in eine Prothesenbasis sowie ein Verfahren zur Herstellung einer Prothesenbasis.

Bei der Versorgung von Patienten mit dentalen Teil- oder Vollprothesen ist heutzutage ein hoher Standard festzustellen. Der Zahnarzt bereitet die zur Versorgung vorgesehene Situation am Patienten vor, während die Zahn(teil)prothese üblicherweise in einem externen Labor oder einem Praxislabor von einem Zahntechniker nach den Vorgaben des Zahnarztes hergestellt wird. Die Qualität der Prothese ist dabei in großem Maße abhängig von der handwerklichen Geschicklichkeit des Zahntechnikers, der die Vorgaben des Zahnarztes in der Herstellung der Prothese berücksichtigen muss, sowie der Qualität dieser Vorgaben.

Des Weiteren ist die Vorbereitung des prothetisch zu versorgenden Patienten für diesen oftmals mit Unannehmlichkeiten verbunden. Erwähnt seien in diesem Zusammenhang beispielsweise verschiedene Sitzungen beim behandelnden Zahnarzt, in denen Abformungen der zu versorgenden Situation vorgenommen werden müssen, die dem Zahntechniker als Negativmodelle dienen. Die sich anschließenden weiteren Abformungen sind zeitaufwendig und oftmals der Grund für fehlerhafte Ausführung der prothetischen Versorgung. Typischerweise sind zwei oder drei Abformungssitzungen erforderlich, bevor der Zahntechniker mit der eigentlichen Herstellung der Prothese beginnen kann.

WO2011/066895 A1 betrifft ein Verfahren für die automatisierte Herstellung von Zahnersatz, umfassend die Schritte Bereitstellen eines digitalen Datensatzes der herzustellenden individuellen Prothese, digitale Trennung des Modells in Zahnbogen und Zahnfleisch, Herstellung des Zahnbogens aus Keramik und Kunststoff mittels Frästechnik oder Herstellung der Prothesenbasis durch generative oder abtragende Methoden aus überwiegend (Meth)-Acrylat-basierten Kunststoffen, den Anschluss des Zahnbogens und das Zahnfleisch durch Kleben oder Verbinden oder eine Kombination von Kleben und Fügen.

EP 2 111 180 A1 betrifft ein Verfahren zur Herstellung eines Basisteils eines künstlichen Gebisses oder eines künstlichen Gebisses, das ein Basisteil aufweist, mit dem Schritt Formen des Basisteils mit einem Rapidprototyping-Verfahren, wie z. B. der 3-D-Lithografie und insbesondere der 3-D-Laserlithografie. Weiterhin wird ein Verfahren zum Erstellen eines Datensatzes, der die Form eines Basisteils eines künstlichen Gebisses angibt offenbart, bei dem ein Zahnfleischareal oder ein Modell davon abgescannt wird und/oder ein Modell eines Basisteils abgescannt wird und/oder die Form des Basisteils auf einem Computer simuliert wird.

EP 1 864 627 A2 offenbart ein Verfahren zur Herstellung von Zahnprothesen nach einem digitalisierten, virtuellen Modell, welches die Kiefersituation wiedergibt, mit den Schritten einer digitalen Erfassung der Kiefersituation und -relationen, digitalen Aufstellung (automatisch als Option), Erzeugung einer geteilten Negativform (Rapid Manufacturing) aus den Daten der digitalen Zahnaufstellung, Einstecken der Konfektionszähne/ konfektionierten Zahneinheiten in die geöffneten Negativformen, Schließen der Negativformen, und Ausfüllen der verbliebenen Hohlräume mit Prothesenkunststoff.

EP 1 444 965 A2 betrifft ein Verfahren zur Herstellung von Zahnersatz, mit den Schritten, Aufnahme und Digitalisierung (Einscannen) der 3-dimensionalen, anatomischen Verhältnisse in der Mundhöhle, gegebenenfalls Aufnahme und Digitalisierung (Einscannen) der 3-dimensionalen Daten von Bissschablonen incl. Bisswällen, gegebenenfalls Aufnahme der Kieferdaten, die normalerweise am Patienten zur Einstellung des Artikulators genommen werden, erhaltenen Verarbeitung des Datensatzes in der Weise, dass die relevanten anatomischen Strukturen für eine virtuelle Zahnaufstellung festliegen und ein virtuelles Modell als Datensatz erhalten wird, gefolgt von der Auswahl der 3-D Datensätze konfektionierter, vorher eingescannter Zähne aus einem weiteren Datensatz, virtuelle Aufstellung der Zähne in das virtuelle Modell als zweiten Datensatz sowie entweder gefolgt von einem Übertragen der virtuellen Aufstellung auf das Modell durch entweder Positionierschablone (z.B. gefräst oder Rapid Prototyped) oder direkte Aufstellung der konfektionierten Zähne auf das Modell, Fixierung der Zähne auf dem Modell, Anbringen der Prothesenbasis oder in einer anderen Alternative, gefolgt von einer direkten Herstellung der Prothesenbasis - nach den Daten der virtuellen Zahnaufstellung - mit Positionierhilfen für die endgültige korrekte Positionierung und Fixierung der konfektionierten Zähne.

WO 2008/005432 A2 offenbart ein System zum Herstellen mindestens eines Teils einer Prothese. Das System umfasst eine dreidimensionale Abtastvorrichtung zum Abtasten einer Oberfläche einer Prothesenvorlage, und ein computerlesbares Medium mit einem Computerprogramm zum Empfangen von Daten aus der Abtasteinrichtung, einem 3-dimensionalen Modell der Oberfläche, und gegebenenfalls Modifizieren des 3-dimensionalen Modells und/oder das Hinzufügen von Funktionen auf das 3 - dimensionale Modell. Das System umfasst auch eine Verarbeitung zur Erzeugung mindestens eines Teils der Prothese aus einem ausgewählten Material, unter Berücksichtigung des 3-dimensionalen Modells. Die Verarbeitung kann materialabtragend oder aufbauend erfolgen.

Aus WO 2015/078701 ist ein künstlicher Zahn zum Einsatz in einer Prothesenbasis bekannt, der einen sichtbaren Außenteil und einen im eingesetzten Zustand innerhalb der Prothesenbasis angeordneten Innenteil aufweist. Der Zahn ist hierbei derart ausgebildet, dass zwischen dem Außenteil und dem Innenteil eine Zahnkante ausgebildet ist. Die Zahnkante ist hierbei derart ausgebildet, dass an ist hierbei derart ausgebildet, dass zwischen dem Außenteil und dem Innenteil eine Zahnkante ausgebildet ist. Die Zahnkante ist hierbei derart ausgebildet, dass an ihr ein Winkelwechsel erfolgt. Es handelt sich insofern um eine klar erkennbare und definierte Kante bzw. Linie. Es erfolgt kein kontinuierlicher Übergang zwischen dem Außenteil und dem Innenteil des Zahns an der Zahnkante. Vielmehr erfolgt eine sprunghafte Änderung des Winkels. Ferner ist der künstliche Zahn derart ausgebildet, dass das Innenteil bezogen auf eine Einsetzrichtung, in der der Zahn in die Prothesenbasis eingesetzt wird, frei von Hinterschnitten ist. Gemäß der WO 2015/078701 hergestellte künstliche Zähne weisen jedoch den Nachteil auf, dass stets eine klar definierte Zahnkante mit Winkelwechsel gegeben sein muss, um den künstlichen Zahn herstellen und richtig in die Prothesenbasis einsetzen zu können. Es besteht insofern die Notwendigkeit insbesondere für ein derartiges automatisches Verfahren zur Herstellung einer Zahnprothese auch künstliche Zähne ohne Zahnkante mit Winkelwechsel bereitzustellen.

Aus US 2016/0095677 ist ein künstlicher Zahn bekannt. Hierin ist ein virtueller Datensatz für den Zahn beschrieben, wobei der Datensatz eine virtuelle Gingivalinie definert.

Aufgabe der Erfindung ist es zur Verbesserung des Herstellungsverfahrens einer Prothesenbasis eine Zahneinheit mit geeigneten künstlichen Zähnen bereitzustellen, wobei insbesondere ein automatisiertes Verfahren zur Herstellung einer Prothesenbasis ermöglicht werden soll.

Die Lösung der Aufgabe erfolgt durch eine Zahneinheit gemäß Anspruch 1 bzw. ein Verfahren zur Herstellung einer Prothesenbasis gemäß Anspruch 5.

Die erfindungsgemäße Zahneinheit gemäß Anspruch 1 weist einen künstlichen Zahn zum Einsetzen in eine Prothesenbasis und einen virtuellen Datensatz dieses Zahns auf. Der künstliche Zahn weist in seinem in die Prothesenbasis eingesetzten Zustand einen sichtbaren Außenteil und einen innerhalb der Prothesenbasis angeordneten Innenteil auf. Der virtuelle Datensatz des Zahns weist Daten der Außengeometrie bzw. der Oberflächengeometrie des Zahns auf.

Das Innenteil des künstlichen Zahns ist derart auszubilden, dass bezogen auf eine Einsetzrichtung bzw. Einschubrichtung in der der Zahn in die Prothesenbasis eingesetzt wird keine Hinterschnitte vorhanden sind. Hierdurch ist das Einsetzen erheblich vereinfacht. Insbesondere ist das Herstellen der Kavität in der Prothesenbasis, die dementsprechend auch keine Hinterschneidung in Einschubrichtung aufweist, deutlich einfacher möglich.

Erfindungsgemäß ist in dem virtuellen Datensatz des Zahns, in dem in Richtung des Innenteils hinterschnittfreien Bereich, eine virtuelle Gingivalinie ausgebildet. Diese definiert den Übergang zwischen dem im eingesetzten Zustand sichtbaren Außenteil und dem nicht sichtbaren Innenteil des Zahns. Da die virtuelle Gingivalinie erfindungsgemäß im hinterschnittfreien Bereich des Zahns angeordnet ist, ist ein Einsetzen des Zahns in die Prothesenbasis in Einsetz- bzw. Einschubrichtung auf einfache Weise möglich. Im Extremfall kann die virtuelle Gingivalinie exakt die Linie beschreiben, ab der bezogen auf die Einsetz- bzw. Einschubrichtung des Zahns in die Prothesenbasis der Bereich beginnt, ab dem kein Hinterschnitt mehr gegeben ist.

Mit Hilfe der erfindungsgemäßen Zahneinheit ist es somit möglich Zähne eindeutig zu definieren, die keine Zahnkante aufweisen, an der ein Winkelwechsel stattfindet. Des Weiteren ist es möglich, die virtuelle Gingivalinie bezogen auf den eingesetzten Zustand des Zahns in unterschiedlicher Höhe anzuordnen. Beispielsweise kann eine Gingivalinie tiefer angeordnet werden, so dass dies einem eher älteren Zahn mit etwas zurückgebildetem Zahnfleisch entspricht. Insofern ist auf sehr einfache Weise eine exakte Anpassung an die Patientensituation möglich.

Der erfindungsgemäße künstliche Zahn ist derart weitergebildet, dass die virtuelle Gingivalinie vollständig umlaufend ausgebildet ist. Es handelt sich bei der virtuellen Gingivalinie somit um eine in sich geschlossene Linie. Dies ist insbesondere bei automatischen Herstellungsverfahren wie CAD/CAM-Verfahren vorteilhaft.

Des Weiteren ist es bevorzugt, dass der künstliche Zahn zur Individualisierung der Zahnform nur an dem Außenteil bearbeitet wird. Dies hat den Vorteil, dass ein insbesondere für die Automatisierung wichtiges, eindeutig definiertes Innenteil besteht und daher die Kavitäten in der Prothesenbasis automatisch hergestellt werden können. Die Form und die Tiefe der Kavitäten sind somit eindeutig vorgegeben.

Bei dem erfindungsgemäßen künstlichen Zahn weist das Innenteil vorzugsweise einen minimalen Außenradius von mindestens 0,6 mm auf. Der im Bereich des Innenteils vorhandene kleinste Radius beträgt somit 0,6 mm oder mehr. Dies ist insbesondere für die Herstellung der Kavität in einer Prothesenbasis vorteilhaft. Besonders bevorzugt ist es, dass der minimale Außenradius mindestens 1,0 mm und insbesondere mindestens 1,25 mm beträgt.

Des Weiteren ist das Innenteil des künstlichen Zahns unsymmetrisch ausgebildet. Insbesondere ist das Innenteil nicht rotationssymmetrisch ausgebildet. Hierdurch ist ein Fehleinsetzen in der Prothesenbasis vermieden.

Zur vollständigen Herstellung einer Prothese ist eine Vielzahl von erfindungsgemäßen Zähnen in einer Bibliothek, aus der eine bestimmte Aufstellung an Zähnen ausgewählt werden kann vorhanden.

Bei dem erfindungsgemäßen Verfahren zur Herstellung einer Prothesenbasis erfolgt ein virtuelles Einbetten mindestens eines erfindungsgemäßen künstlichen Zahns in eine virtuelle Prothesenbasis bzw. eine virtuelle Gingiva. Im nächsten Schritt wird eine Kavitätenkante derart definiert, dass sie sich zumindest teilweise insbesondere vollständig mit der virtuellen Gingivalinie überdeckt. Vorzugsweise erfolgt insofern ein Übertragen der virtuellen Gingivalinie auf die Prothesenbasis zur Definition der Kavitätenkante. Dies erfolgt weiterhin virtuell, so dass für den mindestens einen erfindungsgemäßen Zahn in der virtuellen Prothesenbasis eine virtuelle Kavitätenkante erzeugt ist. Vorzugsweise ist die Kavitätenkante bei fertig gestellter Prothese mit eingesetztem künstlichen Zahn deckungsgleich mit der virtuellen Gingivalinie. Nach dem Definieren der mindestens einen Kavitätenkante erfolgt ein Herstellen der realen Prothesenbasis durch Einbringen einer Kavität in einen Prothesengrundkörper. Dies erfolgt insbesondere durch Ausfräsen der Kavität. Die Herstellung der Kavität erfolgt vorzugsweise durch ein CAD/CAM-Verfahren. Zur Durchführung von CAM-Verfahren dient erfindungsgemäß die Kavitätenkante zur Festlegung einer Werkzeugbewegung. Die Kavitätenkante dient hierbei als Grenzkurve für die Erstellung der Frässtrategie. Aus Grenzkurve und bekannter Kavitätengeometrie werden die Fräswege im CAM generiert. Für den Herstellungsprozess werden die, aus dem Stand der Technik bekannten, erforderlichen Parameter eines Fräsprozesses (Drehzahl, Vorschub, Zustellung seitlich und in der Tiefe, ...) festgelegt.

Besonders bevorzugt ist es, dass das Definieren der virtuellen Kavitätenkante durch virtuelles Subtrahieren des Zahns von der virtuellen Prothesenbasis erfolgt. Hierdurch kann auf einfache Weise ein Übertragen der virtuellen Gingivalinie auf die virtuelle Prothesenbasis und somit einer Definieren der Kaviätenkante erzielt werden.

Die in der Prothesenbasis insbesondere durch CAD/CAM-Verfahren herzustellende Kavität ist in besonders bevorzugter Ausführungsform komplementär zur Unterseite bzw. zum Innenteil des Zahns ausgebildet. Hierdurch kann ein Klebespalt definiert werden, der über die gesamte Klebefläche eine konstante Breite bzw. Dicke aufweist. Dies hat den Vorteil, dass ein äußert präzises und klar definiertes Einsetzen des Zahn in die Kavität gewährleistet ist. Des Weiteren besteht der Vorteil, dass aufgrund des klar definierten Klebespalts das Volumen des Klebespalts ebenfalls eindeutig definiert ist und insofern eine vorgegebene Menge an Klebstoff in die Kavität eingebracht werden kann, wobei ein Herausdrücken von Klebstoff im Bereich der Kavitäten- bzw. Zahnkante somit vermieden werden kann. Dies hat den Vorteil, dass die Nachbearbeitungsschritte vereinfacht werden oder ggf. vollständig entfallen können.

Insbesondere um eine gute Automatisierung zu ermöglichen ist es besonders bevorzugt, dass auch die Kavitäten in der Prothesenbasis derart ausgebildet sind, dass in Einsetzrichtung bzw. Einschubrichtung des Zahns keine Hinterschnitte auftreten.

Die Herstellung der Kavitäten erfolgt vorzugsweise mit einem spanabhebenden Werkzeug wie einem Fräswerkzeug. Hierbei ist es bevorzugt, dass das Werkzeug einen Bearbeitungsradius aufweist, der gleich oder größer dem minimalen Außenradius des Innenteils des künstlichen Zahns ist. Beispielsweise weist ein Fräskopf einen Durchmesser von 1,2 mm auf, wenn der minimale Außenradius des Innenteils mindestens 0,6 mm beträgt.

Besonders bevorzugt ist es, dass mehrere insbesondere alle Zähne eines Zahnbogens anhand des erfindungsgemäßen vorstehend anhand eines Zahns beschriebenen Verfahrens virtuell in die virtuelle Prothesenbasis eingebettet werden. Entsprechend ist es bevorzugt, dass alle zugehörigen Kavitätenkanten insbesondere durch ein virtuelles Subtrahieren definiert werden und sodann wie vorstehend anhand eines Zahn beschreiben sämtliche zugehörigen Kavitäten vorzugsweise mit einem CAD/CAM-Verfahren hergestellt werden.

Vor dem erfindungsgemäßen Einbetten des mindestens einen erfindungsgemäßen Zahns in eine virtuelle Prothesenbasis können vorzugsweise folgende Verfahrensschritte durchgeführt werden:
- Erfassung einer oralen Patientensituation durch Abformung oder mittels digitaler Aufnahme,
- ggf. Digitalisierung der oralen Patientensituation,
- Auswahl der die dentale Prothese bildenden Zähne aus einer ideal errechneten Aufstellung nach entsprechendem Aufstellkonzept von Zähnen oder Zahngruppen, wobei eine virtuelle Aufstellung der Zähne erhalten wird, die virtuell in einem Raum positioniert ist, der die erfasste Patientensituation berücksichtigt,
- virtuelle Einbettung der in der virtuellen Aufstellung angeordneten Zähne in einer virtuellen Prothesenbasis.

Das Aufstellkonzept wird insbesondere patientenspezifisch, beispielsweise von einem behandelnden Arzt erarbeitet.

Unter Teil- oder Vollprothesen ist ein herausnehmbarer, bedingt herausnehmbarer oder festsitzender Zahnersatz zu verstehen.

Die Abformung der Situation im Mund des Patienten (Patientensituation) kann insbesondere durch Abformungsmassen erfolgen. Erfindungsgemäß lässt sich die Abformung vorteilhafterweise zur Erstabformung, Zweitabformung (Funktionsabformung) und Bissregistrierung nutzen.

Die Abformung lässt sich im erfindungsgemäßen Verfahren mit konventionellen Vorrichtungen, sogenannten Abformungslöffeln durchführen. Besonders geeignet ist ein Abformungslöffel, der eine schleimhautkongruente Auflage ermöglicht. Die Randbereiche sollen reduziert sein. Der Abformungslöffel soll zur Aufnahme von Abformungsmaterial dienen können und zur, Aufnahme eines Vertikalmechanismus' zur Bisseinstellung sowie posterioren Geometrien zur Bissfixierung fähig sein.

In einer Ausführungsform der vorliegenden Erfindung wird die digitale Aufnahme der Patientensituation mittels bildgebender, insbesondere optischer Verfahren wie Kameraaufnahme, Computertomographie, Ultraschall durchgeführt.

In einer weiteren Ausführungsform des erfindungsgemäßen Verfahrens enthält die Bibliothek Ausführungen von Zahnbögen, Zahnformen, Zahngrößen, Zahnformen, -größen und Kombinationen davon, wie sie sich beispielsweise aus den VITA Formenkarten Nr. 1694 und Nr. 1756 entnehmen lassen. Gesamtaufstellungen und/oder modulare Aufstellungen für alle Bissklassen nach Angle sind vorzugsweise in der Bibliothek berücksichtigt. Gewünschtenfalls kann die Bibliothek auch Ausgestaltungen der Gingiva in unterschiedlicher Altersausprägung enthalten.

Das erfindungsgemäße Verfahren ermöglicht vorteilhafterweise die Anpassung des Zahnbogens an die individuelle Kieferbogenweite des Patienten durch Berücksichtigung von virtuellen Scharnieren die durch eine Funktion in Form eines Bewegungselements (Bewegung nach innen und nach außen), beispielsweise zwischen Zahn 11 und 21 im Oberkiefer und Zahn 31 und 41 im Unterkiefer, erweitert werden. Die Ausgestaltung der Gingiva kann virtuell z.B. durch Einsetzen von Gaumenfalten oder Anpassung der A-Linie sowie der Radierungen individualisiert werden. Für die Gaumenfalten werden dabei vorzugsweise hinterlegte, virtuelle Modelle der Falten in das virtuelle Modell der Prothese eingesetzt. Hierbei kann es zweckmäßig sein, die Modelle entsprechend der Prothesengestalt individuell zu verändern, z.B. durch Streckung oder Stauchung sowie durch Mapping auf die Gaumenoberfläche. Die Radierung wird durch virtuelle Veränderung der Materialstärke in der Nähe der A-Linie modifiziert, die A-Linie selbst kann als Kurve bzw. Berandungslinie im virtuellen Modell angezeigt und verändert werden.

Diese Verfahrensschritte sind in PCT/EP2013/062279 detailliert beschrieben.

Nachfolgend wird die Erfindung anhand einer bevorzugten Ausführungsform unter Bezugnahme auf die anliegenden Zeichnungen näher erläutert.

Es zeigen:
- Fig. 1: eine schematische perspektivische Seitenansicht eines erfindungs-gemäßen künstlichen Zahns,
- Fig. 2: eine schematische perspektivische Rückansicht eines erfindungs-gemäßen künstlichen Zahns,
- Fig. 3: eine schematische perspektivische Draufsicht einer Kavität in einer Prothesenbasis,
- Fig. 4: eine schematische Schnittansicht eines in die Kavitätenbasis eingesetzten Zahn und
- Fig. 5: eine perspektivische Ansicht einer Prothesenbasis mit teilweise eingesetzten künstlichen Zähnen.

Zur Herstellung einer vollständigen Prothese, d.h. einer Prothesenbasis, in die künstliche Zähne eingesetzt sind, werden bspw. die folgenden Schritte durchgeführt:
- Erfassung einer oralen Patientensituation durch Abformung oder mittels digitaler Aufnahme,
- ggf. Digitalisierung der oralen Patientensituation,
- Auswahl der die dentale Prothese bildenden Zähne aus einer ideal errechneten Aufstellung nach entsprechendem Aufstellkonzept von Zähnen oder Zahngruppen, wobei eine virtuelle Aufstellung der Zähne erhalten wird, die virtuell in einem Raum positioniert ist, der die erfasste Patientensituation berücksichtigt,- virtuelle Einbettung der in der virtuellen Aufstellung angeordneten Zähne in einer virtuellen Gingiva, bzw. virtuellen Prothesenbasis,
- Herstellung der realen Prothese.

Dieses Verfahren ist insbesondere in PCT/EP2013/062279 beschrieben.

Dieses Verfahren ist erfindungsgemäß derart weitergebildet, dass erfindungsgemäß ausgestaltete künstliche Zähne verwendet werden. Eine entsprechende Bibliothek weist daher eine Vielzahl erfindungsgemäß ausgestalteter Zähne auf. Diese weisen unterschiedlich Zahngrößen, -formen etc. auf. Gemeinsam ist den erfindungsgemäßen künstlichen Zähnen insbesondere die Ausgestaltung einer virtuellen Gingivalinie.

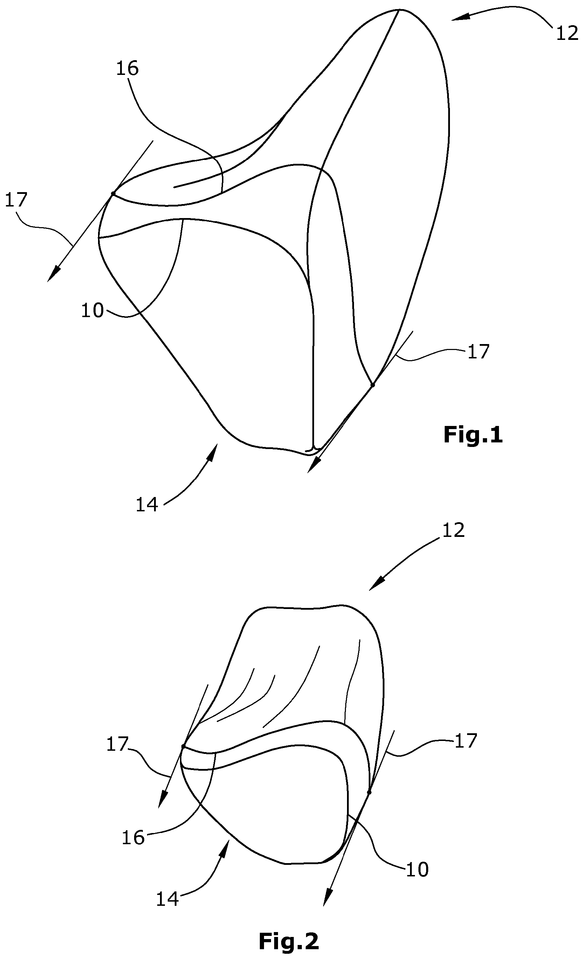

An dem in Fign. 1 und 2 dargestellten Beispiel eines Zahns, bei dem es sich um einen Schneidezahn handelt, ist die virtuelle Gingivalinie 10 dargestellt. Der als Beispiel dargestellte künstliche Zahn weist ein Außenteil 12 und ein Innenteil 14 auf. Das Außenteil 12 ist von dem Innenteil 14 durch die virtuelle Gingivalinie 10 getrennt. Wenn der künstliche Zahn in die Prothesenbasis eingesetzt ist, ist der Außenteil 12 außerhalb der Prothesenbasis angeordnet bzw. sichtbar. Der Innenteil 14 ist in eingesetztem Zustand innerhalb der Prothesenbasis angeordnet und insofern nicht sichtbar.

Die virtuelle Gingivalinie 10 ist als in sich geschlossene umlaufende Linie ausgebildet. Diese virtuelle Gingivalinie 10 ist unter Zuhilfenahme des virtuellen Datensatzes des Zahns in Richtung des Innenteils 14 im hinterschnittfreien Bereich erstellt. Die virtuelle Gingivalinie ist in dem hinterschnittfreien Bereich. Der hinterschnittfreie Bereich ist definiert durch eine Linie 16. Die Linie 16 definiert hierbei die Grenze des hinterschnittfreien Bereichs in Einsetz- bzw. Einschubrichtung. In Figur 1 unterhalb der Linie 16 erfolgt, bezogen auf die Einschubrichtung (Pfeile 17) in die Prothesenbasis, kein Hinterschnitt mehr. Oberhalb der Linie 16 erfolgt ein Hinterschnitt.

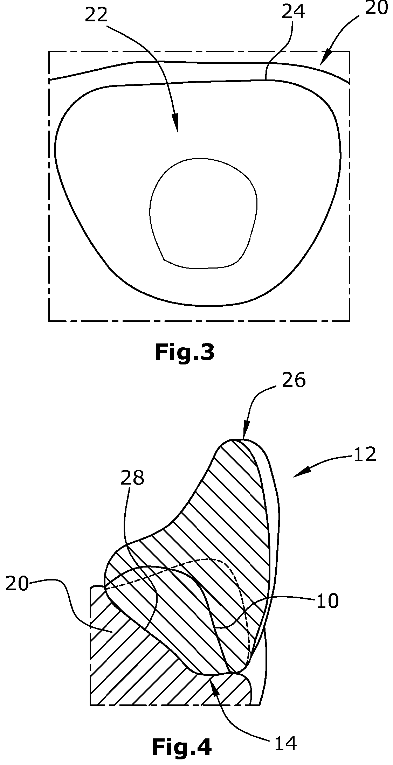

Zur Herstellung einer Prothesenbasis 20 (Fig. 3) erfolgt zunächst ein Subtrahieren der einzelnen Zähne von einer virtuellen Prothesenbasis. Virtuell kann somit eine Prothesenbasis 20 mit einer entsprechend für jeden Zahn ausgebildeten Kavität 22 erzeugt werden. Die virtuelle Prothesenbasis 20 weist somit eine Kavität 22 auf, die von einer Kavitätenkante 24 begrenzt wird. Die Kavitätenkante 24 wird durch die virtuelle Subtraktion des Zahns von der Prothesenbasis 20 erzeugt und entspricht der virtuellen Gingivalinie 10.

Die Herstellung der Kavitäten 22 in der Prothesenbasis 20 erfolgt vorzugsweise mit Hilfe von CAD/CAM-Verfahren. Diese nutzen die Kavitätenkante 24 zur Definition der Fräsbahnen bzw. der Bewegungsbahnen anderer Werkzeuge. Hierdurch ist eine sehr exakte und automatische Herstellung der Kavitäten 22 möglich.

Da der Innenteil 14 der Zähne in eine Einsteckrichtung 26 (Fig. 4) der Zähne in die Kavitäten 22 keine Hinterschneidungen aufweist, ist eine einfache Montage bzw. ein einfaches Einsetzen/Einkleben in die Kavitäten 22 möglich. Die Kavitäten 22 weisen hierbei in die entsprechende Einsteckrichtung 26 ebenfalls keine Hinterschneidung auf. Die Einsteckrichtung 26 verläuft im Wesentlichen senkrecht zur Prothesenbasis. Bei in der Mundhöhle des Patienten angeordneter Prothese würde die Einstreckrichtung im Wesentlichen vertikal verlaufen.

Die Kavität 22 ist zu dem Innenteil komplementär ausgebildet, so dass eine exakte Lagedefinition des Zahns in der Kavität 22 gegeben ist. Durch eine komplementäre Ausgestaltung des Innenteils 14 und der Kavität 22 kann ferner ein Klebespalt 28 (Fig. 4) realisiert werden, der über seine gesamte Fläche eine konstante Breite aufweist. Insofern ist auch das Volumen des Klebespalts und somit die erforderliche Klebstoffmenge exakt bekannt.

In Fig. 4, in der der Zahn und auch die Prothesenbasis 20 geschnitten dargestellt sind, ist zusätzlich die virtuelle Gingivalinie 10 dargestellt. Hierbei verläuft der als durchgezogene Linie dargestellte Teil der virtuelle Gingivalinie 10 bezogen auf die Schnittfläche des Zahns vor der Zeichenebene und der gestrichelt dargestellte Teil hinter der Zeichenebene.

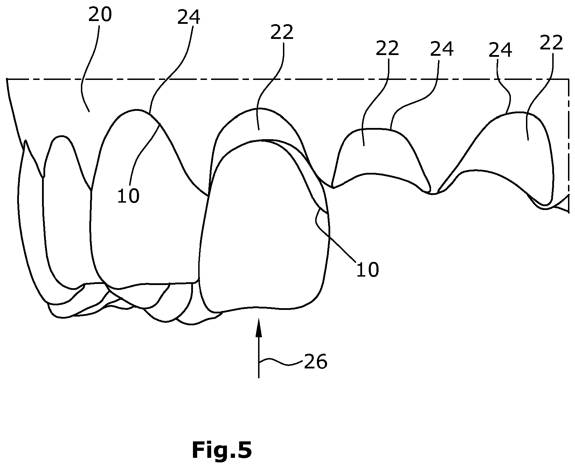

Zur vollständigen Herstellung einer Prothese sind in der Prothesenbasis 20 mehrere Kavitäten 22 vorgesehen (Fig.5). In die einzelnen Kavitäten wird zunächst eine klar definierte Menge Klebstoff eingebracht und sodann die entsprechenden Zähne in Einsteckrichtung 26 in die Kavitäten 22 eingesetzt. Bei eingesetzten Zähnen liegen die Kavitätenkante 24 und die virtuelle Gingivalinie 10 übereinander.

## Patentansprüche

1. Zahneinheit mit einem künstlichen Zahn zum Einsetzen in eine Prothesenbasis (20) und einem virtuellen Datensatz des Zahns,
wobei der künstliche Zahn einen im eingesetzten Zustand sichtbaren Außenteil (12) und einen in eingesetztem Zustand innerhalb der Prothesenbasis (20) angeordneten Innenteil (14) aufweist,
wobei das Innenteil (14) unsymmetrisch ausgebildet ist, wobei das Innenteil derart ausgebildet ist, dass, bezogen auf eine Einsetzrichtung bzw. Einschubrichtung, in der der künstliche Zahn in die Prothesenbasis (20) eingesetzt wird, am Innenteil keine Hinterschnitte vorhanden sind,
wobei der virtuelle Datensatz des Zahns zu seiner Außengeometrie korrespondiert, und
wobei der virtuelle Datensatz des künstlichen Zahns in einem in Richtung des Innenteils (14) hinterschnittfreien Bereich eine virtuelle Gingivalinie (10) aufweist, die den Übergang zwischen Außenteil (12) und Innenteil (14) definiert, wobei der künstliche Zahn keine Zahnkante aufweist, an der ein Winkelwechsel stattfindet und die virtuelle Gingivalinie (10) vollständig umlaufend ist.

2. Zahneinheit nach Anspruch 1, **dadurch gekennzeichnet, dass** die virtuelle Gingivalinie (10) in Abhängigkeit des gewünschten Erscheinungsbildes eines bestimmten Zahns angeordnet ist.

3. Zahneinheit nach Anspruch 1 oder 2, **dadurch gekennzeichnet, dass** das Innenteil (14) nicht rotationssymmetrisch ausgebildet ist.

4. Zahneinheit nach einem der Ansprüche 1 bis 3, **dadurch gekennzeichnet, dass** das Innenteil (14) einen minimalen Außenradius von mindestens 1,0 mm und besonders bevorzugt mindestens 1,25 mm aufweist.

5. Verfahren zur Herstellung einer Prothesenbasis unter Verwendung einer Zahneinheit nach einem der Ansprüche 1 bis 4, mit den Schritten:
virtuelles Einbetten mindestens eines Zahns der Zahneinheit in eine virtuelle Prothesenbasis (20),
Übertragen der virtuellen Gingivalinie (10) auf die Prothesenbasis zur Definition einer Kavitätenkante (24) und
Herstellen der reellen Prothesenbasis (20) durch Einbringen mindestens einer Kavität (22) in einen Prothesengrundkörper.

6. Verfahren zur Herstellung einer Prothesenbasis nach Anspruch 5, bei welchem die Kavitätenkante (24) durch virtuelles Subtrahieren des Zahns von der virtuellen Prothesenbasis (20) definiert wird.

7. Verfahren zur Herstellung einer Prothesenbasis nach Anspruch 5 oder 6, bei welchem das Herstellen der Kavität (22) durch CAD/CAM-Verfahren erfolgt, wobei die Kavitätenkante (24) zur Festlegung einer Werkzeugbewegung dient.

8. Verfahren zur Herstellung einer Prothesenbasis nach einem der Ansprüche 5 bis 7, bei welchem die Kavität (22) zur Ausbildung eines Klebespalts (28) konstanter Breite komplementär zur Unterseite des Zahns hergestellt wird und/oder bei welchem die Kavitäten (22) in Einschubrichtung (26) des Zahns hinterschnittfrei hergestellt werden.

9. Verfahren zur Herstellung einer Prothesenbasis nach einem der Ansprüche 5 bis 8, bei welchem ein Werkzeug, insbesondere ein Fräswerkzeug, zur Ausbildung der Kavitäten (22) einen Bearbeitungsradius aufweist, der gleich oder größer dem minimalen Außenradius des Innenteils (14) des in die Kavität einzusetzenden künstlichen Zahns ist.

10. Verfahren zur Herstellung einer Prothesenbasis nach einem der Ansprüche 5 bis 9, bei welchem virtuell mehrere, insbesondere alle Zähne eines Zahnbogens eingebettet werden, alle zugehörigen Kavitätenkanten (24) definiert werden und alle zugehörigen Kavitäten (22) hergestellt werden.

11. Verfahren zur Herstellung einer Prothesenbasis nach einem der Ansprüche 5 bis 10, bei welchem vor dem virtuellen Einbetten des mindestens einen Zahns mindestens folgende Schritte durchgeführt werden:
Erfassung einer oralen Patientensituation durch Abformung oder mittels digitaler Aufnahme,
ggf. Digitalisierung der oralen Patientensituation,
Auswahl der die dentale Prothese bildenden Zähne aus einer ideal errechneten Aufstellung nach entsprechendem Aufstellkonzept von Zähnen oder Zahngruppen, wobei eine virtuelle Aufstellung der Zähne erhalten wird, die virtuell in einem Raum positioniert ist und zu der die erfasste Patientensituation passt,
virtuelle Einbettung der in der virtuellen Aufstellung angeordneten Zähne in einer virtuellen Prothesenbasis.

## Claims

1. Tooth unit comprising an artificial tooth for insertion into a denture base (20) and a virtual data set of the tooth,
the artificial tooth having an outer part (12) visible in the inserted state and an inner part (14) arranged inside the denture base (20) in the inserted state, and
the inner part (14) being designed to be non-symmetric, the inner part being designed such that relative to a direction of insertion in which the artificial tooth is inserted into the denture base (20), no undercuts are present at the inner part, the virtual data set of the tooth corresponding to its outer geometry, and
the virtual data set of the artificial tooth having a virtual gingiva line (10) in the region which is free of undercuts in the direction of the inner part (14), said gingiva line defining the transition from the outer part (12) to the inner part (14), the artificial tooth having no tooth edge at which a change of angle occurs and the virtual gingiva line (10) extends completely circumferentially.

2. Tooth unit of claim 1, **characterized in that** the virtual gingiva line (10) is arranged depending on the desired appearance of a certain tooth.

3. Tooth unit of claim 1 or 2, **characterized in that** the inner part (14) is designed to be rotationally non-symmetric.

4. Tooth unit of one of clams 1 to 3, **characterized in that** the inner part (14) has a minimum outer radius of at least 1.0 mm and particularly preferred at least 1.25 mm.

5. Method for producing a denture base using a tooth unit according to one of claims 1 to 4, comprising the following steps:
virtual embedding of at least one tooth of the tooth unit into a virtual denture base (20),
transferring the virtual gingiva line (10) onto the denture base to define a cavity edge (24), and
producing the real denture base (20) by forming at least one cavity (22) in a denture basic body.

6. Method for producing a denture base of claim 5, wherein the cavity edge (24) is defined by virtual subtraction of the tooth from the virtual denture base (20).

7. Method for producing a denture base of claim 5 or 6, wherein the cavity (22) is made using CAD/CAM methods, the cavity edge (24) serving to define a tool movement.

8. Method for producing a denture base of one of claims 5 to 7, wherein, for forming a bonding gap (28) of constant width, the cavity (22) is produced to be complementary to the lower side of the tooth, and/or wherein the cavities (22) are produced free of undercuts in the direction of insertion (26) of the tooth.

9. Method for producing a denture base of one of claims 5 to 8, wherein a tool, in particular a milling tool, for forming the cavities (22) has a working radius that is equal to or greater than the minimum outer radius of the inner part (14) of the artificial tooth to be inserted into the cavity.

10. Method for producing a denture base of one of claims 5 to 9, wherein a plurality of teeth, in particular all teeth of a dental arch are embedded in a virtual manner, all associated cavity edges (24) are defined and all associated cavities (22) are produced.

11. Method for producing a denture base of one of claims 5 to 10, wherein, prior to the virtual embedding of the at least one tooth, at least the following steps are performed:
determining an oral situation of a patient by making impressions or by digital imaging,
possibly, digitizing the oral situation of a patient,
selecting the teeth forming the dental prosthesis from an ideally calculated arrangement according to a corresponding arrangement concept of the teeth or of sets of teeth, whereby a virtual arrangement of the teeth is obtained that is positioned virtually in a space that gives consideration to the patient's situation determined,
virtually embedding the teeth set up in the virtual arrangement into a virtual denture base.

## Revendications

1. Unité dentaire comprenant une dent artificielle, destinée à être insérée dans une base de prothèse (20), et un jeu de données virtuel de la dent, dans laquelle
la dent artificielle présente une partie extérieure (12), visible à l'état inséré, et une partie intérieure (14) disposée, à l'état inséré, à l'intérieur de la base de prothèse (20),
la partie intérieure (14) est réalisée de manière asymétrique,
la partie intérieure est réalisée de telle sorte que, par rapport à une direction d'insertion ou à une direction de mise en place dans laquelle la dent artificielle est insérée dans la base de prothèse (20), il n'y a pas de contre-dépouille sur la partie intérieure,
le jeu de données virtuel de la dent correspondant à sa géométrie extérieure, et
le jeu de données virtuel de la dent artificielle présente une ligne gingivale virtuelle (10) dans la zone exempte de contre-dépouille en direction de la partie intérieure (14), ligne qui définit la transition entre la partie extérieure (12) et la partie intérieure (14),
la dent artificielle ne présente pas de bord de dent au niveau duquel il y a un changement d'angle, et la ligne gingivale virtuelle (10) s'étend sur tout le pourtour.

2. Unité dentaire selon la revendication 1,
**caractérisée en ce que** la ligne gingivale virtuelle (10) est disposée en fonction de l'aspect souhaité d'une dent particulière.

3. Unité dentaire selon la revendication 1 ou 2,
**caractérisée en ce que** la partie intérieure (14) est réalisée de manière non symétrique de révolution.

4. Unité dentaire selon l'une des revendications 1 à 3,
**caractérisée en ce que** la partie intérieure (14) présente un rayon extérieur minimal d'au moins 1,0 mm et plus préférentiellement d'au moins 1,25 mm.

5. Procédé de fabrication d'une base de prothèse en utilisant une unité dentaire selon l'une des revendications 1 à 4, comprenant les étapes consistant à :
intégrer virtuellement au moins une dent de l'unité dentaire dans une base de prothèse virtuelle (20),
reporter la ligne gingivale virtuelle (10) sur la base de prothèse pour définir un bord de cavité (24), et
réaliser la base de prothèse réelle (20) en créant au moins une cavité (22) dans un corps de base de prothèse.

6. Procédé de fabrication d'une base de prothèse selon la revendication 5, dans lequel le bord de cavité (24) est défini en soustrayant virtuellement la dent de la base de prothèse virtuelle (20).

7. Procédé de fabrication d'une base de prothèse selon la revendication 5 ou 6,
dans lequel la création de la cavité (22) s'effectue par un procédé CAD/CAM, le bord de cavité (24) servant à définir un mouvement de l'outil.

8. Procédé de fabrication d'une base de prothèse selon l'une des revendications 5 à 7,
dans lequel la cavité (22) est créée de manière complémentaire à la face inférieure de la dent pour former un interstice de collage (28) de largeur constante, et/ou
les cavités (22) sont créées sans contre-dépouille dans la direction d'insertion (26) de la dent.

9. Procédé de fabrication d'une base de prothèse selon l'une des revendications 5 à 8,
dans lequel un outil, en particulier un outil de fraisage, pour créer les cavités (22) présente un rayon d'usinage égal ou supérieur au rayon extérieur minimal de la partie intérieure (14) de la dent artificielle à insérer dans la cavité.

10. Procédé de fabrication d'une base de prothèse selon l'une des revendications 5 à 9,
dans lequel, par voie virtuelle, plusieurs dents, en particulier toutes les dents d'une arcade dentaire, sont intégrées, tous les bords de cavité (24) associés sont définis et toutes les cavités (22) associées sont créées.

11. Procédé de fabrication d'une base de prothèse selon l'une des revendications 5 à 10,
dans lequel, avant l'intégration virtuelle d'au moins une dent, on effectue au moins les étapes suivantes consistant à :
saisir une situation orale du patient par prise d'empreinte ou au moyen d'une prise de vue numérique,
le cas échéant, numériser la situation orale du patient,
sélectionner les dents formant la prothèse dentaire à partir d'une implantation calculée de manière idéale selon un concept d'implantation correspondant de dents ou de groupes de dents, une implantation virtuelle des dents étant obtenue, qui est positionnée virtuellement dans un espace et à laquelle correspond la situation saisie du patient,
intégrer virtuellement les dents, disposées dans l'implantation virtuelle, dans une base de prothèse virtuelle.
